# EUROPÄISCHE PATENTANMELDUNG

(11) **EP 4 321 780 A1**
(43) Veröffentlichungstag der Anmeldung: **14.02.2024**
(21) Anmeldenummer: 23000110.9
(22) Anmeldetag: 07.08.2023
(51) Int. Cl.: F16K 3/02, F16K 31/122, F16K 31/124, F16K 31/40, F16K 31/42

(54) **SCHIEBERVENTIL, MODUL MIT EINEM VENTIL UND ANLAGE ZUM FÖRDERN VON SCHÜTTGUT MIT VENTILEN**

(30) Priorität: 10.08.2022 DE 102022002961
(71) Anmelder: Kramer, Walter, 6333 Hünenberg See (CH)
(72) Erfinder: Kramer, Walter, 6333 Hünenberg See (CH)
(74) Vertreter: Kohl, Karl-Heinz

(57) **Zusammenfassung**

Das Schieberventil hat einen Schieber (44) zum Öffnen und Schließen einer Förderleitung (57), der mit einem Kolben (49) verbunden ist. Der Kolben (49) begrenzt einen Druckraum (61) innerhalb eines Gehäuses (43), der mit dem Inneren der Förderleitung (57) druckverbindbar ist. Ein Modul zur Herstellung einer Förderleitung (57) einer Anlage zum Fördern von Schüttgut hat einen Rohrabschnitt (30), von dem ein rohrförmiges Querstück (31, 32) abzweigt, in dem ein Ventil (14) sitzt. Die Anlage zum Fördern von Schüttgut hat wenigstens zwei das Schüttgut enthaltende Sender und wenigstens einen das Schüttgut aufnehmenden Empfänger, die durch Förderleitungen miteinander leitungsverbunden sind. Die Förderleitungen haben wenigstens eine Empfänger-Sammelleitung, die einen aufwärts verlaufenden Leitungsabschnitt aufweist, in den wenigstens zwei Querleitungen münden, in denen jeweils ein Ventil (14) zum Öffnen und Schließen der Leitungsabschnitte sitzt.

## Beschreibung

Die Erfindung betrifft ein Schieberventil nach Anspruch 1, ein Modul zur Herstellung einer Förderleitung einer Anlage zum Fördern von Schüttgut nach Anspruch 12 sowie eine Anlage zum Fördern von Schüttgut nach dem Oberbegriff des Anspruches 13.

Es sind Förderanlagen bekannt, mit denen Schüttgut von Sendern zu Empfängern gefördert wird. Die Förderung erfolgt hierbei mittels Unterdruck. Die Empfänger können jeweils über eine Förderleitung mit wenigstens zwei Empfängern verbunden werden. Bei den Abgängen von den Förderleitungen zu den Empfängern können Verstopfungen auftreten, die zu Problemen bei der Förderung führen.

Auch ist es bekannt, die Senderleitungen zu einer Verteilstation zu führen, von der jeweils eine Leitung zu jedem Empfänger führt. Die Auswahl des Schüttgutes, das von einem Sender zu einem Empfänger gefördert werden soll, erfolgt manuell durch Umstecken von Förderschläuchen oder automatisch durch Schiebe- oder Drehbewegungen eines Teils der Förderleitung.

Der Erfindung liegt die Aufgabe zugrunde, das Schieberventil, das Modul und die gattungsgemäße Anlage so auszubilden, dass das Schüttgut zuverlässig vom ausgewählten Sender zum ausgewählten Empfänger gefördert werden kann.

Diese Aufgabe wird beim Schieberventil erfindungsgemäß mit den Merkmalen des Anspruches 1, beim Modul erfindungsgemäß mit den Merkmalen des Anspruches 12 und bei der gattungsgemäßen Anlage erfindungsgemäß mit den kennzeichnenden Merkmalen des Anspruches 13 gelöst.

Das erfindungsgemäße Schieberventil zeichnet sich dadurch aus, dass sein Schieber automatisch in Abhängigkeit vom jeweils herrschenden Druck in der Förderleitung verstellt wird. Hierzu ist der Schieber mit einem Kolben verbunden, der innerhalb eines Gehäuses einen Druckraum begrenzt. Das Schaltventil in der Druckübertragungsverbindung zwischen der Förderleitung und dem Druckraum gibt, wenn es geöffnet ist, die Druckverbindung zwischen der Förderleitung und dem Druckraum frei, dann herrscht der Druck in der Förderleitung auch im Druckraum. Unter Druck ist ein Unterdruck und ein Überdruck zu verstehen. Im Druckraum tritt bei einer Saugförderung ein Unterdruck auf, der dazu führt, dass der Kolben durch Saugwirkung verschoben wird. Da der Kolben mit dem Schieber verbunden ist, wird dieser entsprechend aus seiner Schließstellung in seine Offenstellung verstellt, so dass das Material durch die Förderleitung strömen kann.

Bei einem Druckbetrieb wird der Kolben durch den im Druckraum herrschenden Druck weggeschoben, wodurch ebenfalls der mit ihm verbundene Schieber aus der Schließ- in die Offenstellung gelangt.

Die Verstellung des Schiebers erfolgt rechtzeitig, bevor das zu fördernde Material durch die Förderleitung strömt. Dadurch ist sichergestellt, dass das Material ungehindert durch die Förderleitung strömen kann.

Der Schieber ist vorteilhaft über wenigstens ein Verbindungsstück mit dem Kolben verbunden. Das Verbindungsstück ist bevorzugt eine Kolbenstange, die sich einfach am Kolben befestigen lässt. Über das Verbindungstück kann der Schieber mit ausreichendem Abstand zum Kolben angeordnet werden, so dass der Schieber problemfrei verstellt werden kann.

In den Druckraum mündet bei einer bevorzugten Ausführungsform mindestens eine Öffnung, an die eine erste Druckübertragungsleitung angeschlossen ist.

Diese Druckübertragungsleitung ist in bevorzugter Weise an ein Schaltventil angeschlossen, mit dem der Durchgang durch die Druckübertragungsleitung geöffnet oder geschlossen werden kann.

Das Schaltventil befindet sich in einer bevorzugten Ausführung innerhalb eines Ventilgehäuses. Dort lässt sich das Schaltventil einfach einbauen und bei Bedarf, beispielsweise für Reparaturfälle, auch einfach ausbauen.

An das Schaltventil ist vorteilhaft eine zweite Druckübertragungsleitung angeschlossen, die zur Verbindung mit der Förderleitung vorgesehen ist. Die zweite Druckübertragungsleitung ist mit dem Inneren der Förderleitung verbunden, so dass der in der Förderleitung jeweils herrschende Druck auch in der zweiten Druckübertragungsleitung herrscht.

Soll ein Förderzyklus stattfinden, wird das Schaltventil geöffnet, so dass der in zweiten Druckübertragungsleitung herrschende Druck über das geöffnete Schaltventil und die erste Druckübertragungsleitung im Druckraum herrscht.

Die Förderleitung ist zum Anschluss der zweiten Druckübertragungsleitung vorteilhaft mit einer Öffnung versehen, über welche der in der Förderleitung herrschende Druck in den Druckraum übertragen werden kann.

Das Schaltventil ist bevorzugt ein Magnetventil, das sich in einfacher Weise ansteuern lässt, kompakt ausgebildet ist und sich problemlos im Ventilgehäuse unterbringen lässt.

Vorteilhaft ist es, die beiden Endlagen des Schiebers zu überwachen. Hierzu sind bei einer vorteilhaften Ausführungsform Endschalter vorgesehen, die mit dem Schieber zusammenwirken können, wenn dieser seine Offen- und/oder seine Schließstellung einnimmt. Die Endschalter können Näherungsschalter sein.

Es ist möglich, den Schieber mit wenigstens einem Anschlagelement zu versehen, das in der jeweiligen Endstellung des Schiebers an einem Gegenanschlag zur Anlage kommt.

Wird das Schieberventil in einem Fördersystem in einer senkrechten oder nahezu senkrechten Lage eingebaut, dann erfolgt die Rückstellung des Schiebers in seine Schließstellung sehr einfach dadurch, dass die Förderung beendet wird. Dadurch besteht in der Förderleitung kein Druck mehr. Der Druckunterschied zwischen der Förderleitung und dem Druckraum fällt weg, so dass der Kolben unter seinem Eigengewicht nach unten verschoben wird, wodurch der Schieber aus der Offen- in die Schließstellung gelangt. Da der Schieber mit dem Kolben verbunden ist, wirkt auch das Gewicht des Schiebers auf den Kolben und seine Zurückschiebebewegung.

Wird das Schieberventil in einer Schräg- oder gar in einer Horizontallage eingebaut, dann wirkt in vorteilhafter Weise auf den Kolben in der Offenstellung des Schiebers eine Rückstellkraft.

Sie wird dadurch erzeugt, dass im Druckraum wenigstens ein Druckmedium untergebracht ist, das auf den Kolben die Rückstellkraft ausübt. Das Druckmedium ist vorteilhaft eine Druckfeder, die so eingestellt ist, dass der Kolben unter dem Förderdruck in der Förderleitung verschoben werden kann, um den Schieber in seine Offenstellung zu verschieben.

Die Rückstellkraft kann durch wenigstens ein Rückholelement erzeugt werden, das am Schieber angreift.

Ein solches Rückholelement ist vorteilhaft ein elastisch dehnbares oder ein ein Gewicht tragendes Zugseil. Das elastisch dehnbare Zugseil wird in der Offenstellung des Schiebers elastisch gedehnt, wodurch eine Rückstellkraft über den Schieber auf den Kolben wirkt. Die Zugkraft des Zugseiles ist so eingestellt, dass der Kolben unter dem in der Förderleitung herrschenden jeweiligen Betriebsdruck zuverlässig verschoben werden kann. Dies gilt auch für den Fall, dass am Zugseil ein Gewicht hängt, das den Schieber und damit den Kolben in Rückstellrichtung belastet.

Das erfindungsgemäße Modul dient zur Zusammenstellung der Förderleitung einer Förderanlage für Schüttgut. Das Modul hat einen Rohrabschnitt, von dem ein rohrförmiges Querstück abzweigt, in dem ein erfindungsgemä-ßes Schaltventil sitzt. Zur Herstellung der Förderleitung werden zwei oder mehr Module mit ihren Rohrabschnitten aneinander gesetzt, wodurch sich eine durchgehende Förderleitung ergibt. Die Querstücke sind vorteilhaft von den Rohrabschnitten entgegen Förderrichtung schräg aufwärts gerichtet, so dass eventuell nach Beendigung eines Förderzyklus in den Querstücken befindliches Material nach unten in den Rohrabschnitt gelangen kann. Dort wird es beim nächsten Förderzyklus mitgenommen. Dadurch werden Verstopfungen in der Förderleitung zuverlässig vermieden.

Bei der erfindungsgemäßen Anlage haben die Förderleitungen zwischen den Sendern und dem Empfänger die wenigstens eine Empfänger-Sammelleitung. Sie hat einen aufwärts, beispielsweise senkrecht verlaufenden Leitungsabschnitt, in den wenigstens zwei Querleitungen münden. In ihnen sitzt jeweils ein erfindungsgemäßes Schaltventil zum Öffnen und Schließen des Leitungsabschnittes. Die Querleitungen liegen unter einem spitzen Winkel zu den von oben nach unten verlaufenden Leitungsabschnitten. Dadurch kann das zu fördernde Schüttgut am Ende eines Förderzyklus nach unten in den Leitungsabschnitt fallen. Dort kann das Schüttgut beim nächsten Förderzyklus mitgenommen und dem jeweiligen Empfänger zugeführt werden.

Der aufwärts verlaufende Leitungsabschnitt wird in vorteilhafter Weise dadurch erreicht, dass zwei oder mehr erfindungsgemäße Module mit ihren Rohrabschnitten fluiddicht zusammengesetzt werden. Diese Rohrabschnitte bilden im zusammengesetzten Zustand den Leitungsabschnitt der Empfänger-Sammelleitung.

Die Zahl der Module bestimmt die gewünschte Anzahl der Sender, von denen aus das Schüttgut den Empfängern zugeleitet werden soll.

Bevorzugt ist am oberen Ende der Querleitung ein Leersaugmodul angeordnet, das keinen Anschluss an einen Sender hat. Dadurch kann nach jedem Förderzyklus die Empfängerleitung bis zum Empfänger leergesaugt und gereinigt werden, was insbesondere bei einem Materialwechsel erforderlich ist.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: in schematischer Darstellung eine Anlage zur Förderung von Schüttgut im Saugbetrieb,
- Fig. 2: in einer Darstellung entsprechend Fig. 1 eine erfindungsgemäße Anlage zur Förderung von Schüttgut im Druckbetrieb,
- Fig.3 und Fig. 4: in Darstellungen entsprechend den Fig. 1 und 2 weitere Ausführungsformen von erfindungsgemäßen Anlagen,
- Fig. 5: in vergrößerter Darstellung die Anordnung von erfindungsgemäßen Modulen, die jeweils ein erfindungsgemäßes Schieberventil aufweisen,
- Fig. 6: in einer Darstellung ähnlich Fig. 5 eine weitere Ausführungsform eines erfindungsgemäßen Moduls mit einem erfindungsgemäßen Schieberventil,
- Fig. 7: zwei übereinander angeordnete, miteinander strömungsverbundene erfindungsgemäße Module gemäß Fig. 6,
- Fig. 8: in perspektivischer Darstellung ein erfindungsgemäßes Schieberventil der erfindungsgemäßen Anlage,
- Fig. 9: eine Ansicht in Richtung des Pfeiles IX in Fig.8,
- Fig. 10: eine Ansicht in Richtung des Pfeiles X in Fig. 8,
- Fig. 11: einen Schnitt längs der Linie A-A in Fig. 10 mit dem Schieberventil in Schließstellung,
- Fig. 12: das Schieberventil gemäß Fig. 11 in Offenstellung,
- Fig. 13: in einer Darstellung entsprechend Fig. 12 eine zweite Ausführungsform eines erfindungsgemäßen Schieberventiles.

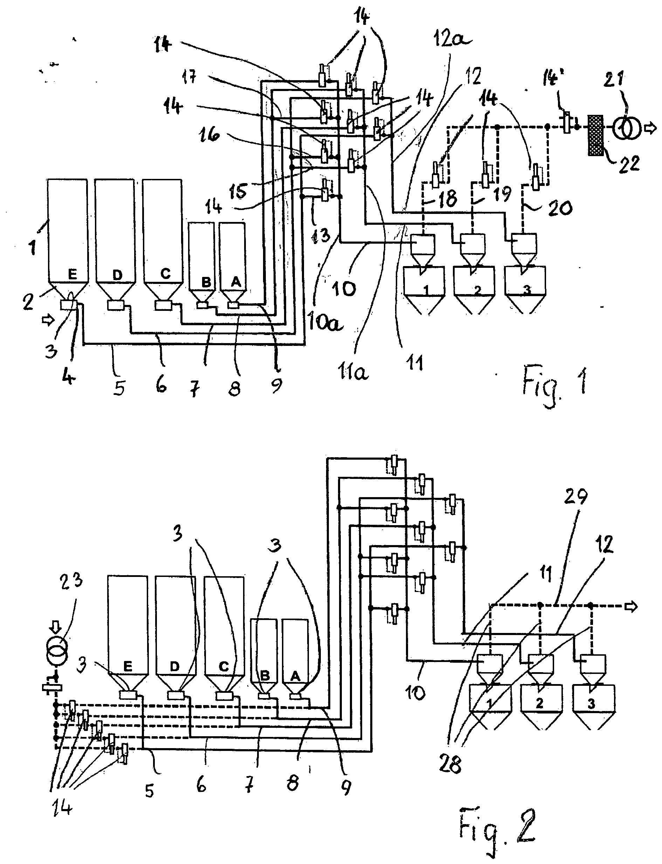

Fig. 1 zeigt eine Anlage zur Förderung für Schüttgüter. Die Anlage hat beispielhaft fünf Sender A bis E, die beispielhaft als Silos ausgebildet sind, in denen sich das Schüttgut befindet. Unter Schüttgut sind alle fließfähigen Materialien zu verstehen, die mittels eines gasförmigen Mediums, insbesondere Luft, transportiert werden können, wie Granulate, Pulver und dgl.

Im dargestellten Ausführungsbeispiel haben die Sender A, B kleineres Fassungsvermögen als die Sender C bis E. Alle Sender können gleiches Fassungsvermögen oder auch ungleiches Fassungsvermögen haben.

Jeder Sender A bis E hat einen beispielsweise zylindrischen Mantel 1, der am unteren Ende in einen nach unten sich verjüngenden Mantel 2 übergeht. Am unteren Ende des Mantels 2 befindet sich eine Auslassöffnung 3, die durch ein Ventil 4 geschlossen werden kann. Eine solche Ausbildung ist bei einer Druckförderung des Schüttgutes vorgesehen.

Bei einer Vakuum- bzw. Saugförderung hat der Mantel 2 keine Auslassöffnung. Statt dessen ragt durch den Mantel 2 in dessen Innenraum ein Saugrohr, mit dem das Schüttgut abgesaugt werden kann.

An die Auslassöffnung 3 bzw. an das Saugrohr jedes Senders A bis E ist eine Senderleitung 5 bis 9 angeschlossen. Sie können mit Empfängerleitungen 10 bis 12 verbunden werden, um das in den Sendern A bis E befindliche Schüttgut wahlweise Empfängern 1 bis 3 zu zuführen. Sie sitzen beispielhaft auf Verarbeitungsmaschinen, mit denen das zugeführte Schüttgut entsprechend verarbeitet wird.

Die Senderleitungen 5 bis 9 sind fest mit den Empfängerleitungen 10 bis 12 strömungsverbunden. Hierbei sind diese Leitungen so miteinander gekoppelt, dass die Empfänger 1 bis 3 mit unterschiedlichen Sendern A bis E gekoppelt werden können.

Nachfolgend wird ein Beispiel für die Strömungsverbindung zwischen den Senderleitungen 5 bis 9 und den Empfängerleitungen 10 bis 12 angegeben. Dieses Ausführungsbeispiel ist aber nicht als beschränkend zu verstehen.

Die Senderleitung 5 ist an die Empfängerleitung 12 angeschlossen. Von der Senderleitung 5 zweigt eine Querleitung 13 ab, welche die Senderleitung 5 mit der Empfängerleitung 10 verbindet. In der Senderleitung 5 und in der Querleitung 13 sitzt jeweils ein Schieberventil 14 (nachfolgend Ventil genannt), mit dem die Senderleitung 5 und die Querleitung 13 geöffnet und geschlossen werden können.

Die Senderleitung 6 ist an die Empfängerleitung 12 angeschlossen. Über Querleitungen 15, 16 ist die Senderleitung 6 auch mit den Empfängerleitungen 11, 10 verbunden. In der Senderleitung 6 sowie in den Querleitungen 15, 16 sitzt jeweils ein Ventil 14.

Die Senderleitung 7 ist an die Empfängerleitung 11 angeschlossen. In der Senderleitung 7 sitzt das Ventil 14.

Die Senderleitung 8 ist an die Empfängerleitung 11 und über eine Querleitung 17 an die Empfängerleitung 10 angeschlossen. In der Querleitung 17 sowie in der Senderleitung 8 sitzt jeweils ein Ventil 14.

Die Senderleitung 9 schließlich schließt an die Empfängerleitung 10 an und ist mit dem Ventil 14 versehen.

Mit Hilfe der Ventile 14 ist es einfach möglich, die Empfänger 1 bis 3 mit dem jeweils gewünschten Schüttgut aus den Sendern A bis E zu befüllen. Im dargestellten Beispielsfall ist der Empfänger 1 den Sendern A, B, D und E zugeordnet. Aus dem Sender A kann das Schüttgut bei geöffnetem Ventil 14 über die Senderleitung 9 und die Empfängerleitung 10 zugeführt werden. Das Schüttgut im Sender B kann über die Senderleitung 8 und die Querleitung 17 bei geöffnetem Ventil in die Empfängerleitung 10 und von dort zum Empfänger 1 gefördert werden. In diesem Falle ist selbstverständlich das in der Senderleitung 9 sitzende Ventil 14 geschlossen.

Über die Senderleitung 6 und die Querleitung 16 kann das Schüttgut aus dem Sender D dem Empfänger 1 zugeführt werden. Das in der Querleitung 16 sitzende Ventil 14 ist hierbei geöffnet.

Das Schüttgut aus dem Sender E kann über die Senderleitung 5 und die Querleitung 13 in die Empfängerleitung 10 und von dort zum Empfänger 1 gefördert werden, wobei das in der Querleitung 13 sitzende Ventil 14 geöffnet ist.

Alle nicht an der Förderung vom Sender zum Empfänger beteiligten Leitungen sind durch die Ventile 14 abgesperrt, so dass in den jeweiligen Empfänger 1 bis 3 jeweils nur eine Schüttgutsorte gelangen kann.

Der Empfänger 2 ist den Sendern B, C und D zugeordnet.

Das Schüttgut im Sender B kann über die Leitung 8 in die Empfängerleitung 11 und von dort in den Empfänger 2 gelangen. Das in der Senderleitung 8 sitzende Ventil 14 ist dabei geöffnet.

Das Schüttgut im Sender C kann über die Senderleitung 7 bei geöffnetem Ventil 14 ebenfalls über die Empfängerleitung 11 dem Empfänger 2 zugeführt werden.

Der Sender D kann über die Senderleitung 6 und die Querleitung 15 ebenfalls mit der Empfängerleitung 11 und damit dem Empfänger 2 strömungsverbunden werden.

Der Empfänger 3 ist den Sendern D und E zugeordnet. Das Schüttgut aus dem Sender D kann über die Senderleitung 6 und der Empfängerleitung 12 dem Empfänger 3 zugeführt werden.

Der Sender E lässt sich über die Senderleitung 5 und die Empfängerleitung 12 ebenfalls mit dem Empfänger 3 verbinden.

Die Förderfunktion der Anlage ist einfach. Dem Empfänger 1 bis 3 wird jeweils der entsprechende Sender A bis E durch Öffnen des entsprechenden Ventiles 14 zugewiesen.

An die Empfänger 1 bis 3 ist jeweils eine Saugleitung 18 bis 20 angeschlossen, die mit einer Saugquelle 21 verbunden sind. In den Saugleitungen 18 bis 20 sitzt jeweils ein Ventil 14, so dass die Empfänger 1 bis 3 wahlweise von der Saugquelle 21 getrennt werden können.

Der Saugquelle 21 vorgeschaltet ist ein Ventil 14', mit dem in der Schließstellung die Saugverbindung zwischen der Saugquelle 21 und sämtlichen Empfängern 1 bis 3 getrennt werden kann. Der Saugquelle 21 kann wenigstens ein Filter 22 vorgeschaltet sein.

Mit Hilfe der wenigstens einen Saugquelle 21 wird das Schüttgut aus den jeweiligen Sendern A bis E abgesaugt und den jeweiligen Empfängern 1 bis 3 zugeführt. Bei jedem Saugzyklus wird das entsprechende zugewiesene Ventil 14 geöffnet.

Soll nach Produktionsende der Empfänger 1 bis 3 ein anderes Schüttgutmaterial erhalten, werden die entsprechenden Ventile 14 so umgeschaltet, dass das andere Material aus dem gewünschten Sender A bis E dem entsprechenden Empfänger 1 bis 3 zugeführt werden kann.

Nach jedem Fördervorgang von einem Sender zu einem Empfänger wird der Luftstrom in bekannter Weise unterbrochen.

Damit einem Empfänger 1 bis 3 unterschiedliche Materialien aus den Sendern A bis E zugeordnet werden, sind wenigstens zwei Eingänge in der jeweiligen Empfängerleitung 10 bis 12 vorgesehen. Die Empfängerleitungen 10 bis 12 verlaufen in dem Bereich, in dem die Senderleitungen bzw. die Querleitungen anschließen, aufwärts, im Ausführungsbeispiel senkrecht (Empfänger-Sammelleitungen 10a bis 12a), so dass das Schüttgut in diesem Bereich von oben nach unten gefördert wird.

Die senkrecht verlaufenden Empfänger-Sammelleitungen 10a bis 12a sind aus Modulen zusammengesetzt, die jeweils ein senkrecht verlaufendes Rohrstück, ein daran angeschlossenes, senkrecht verlaufendes Rohrstück sowie das Ventil 14 aufweisen, das in diesem quer verlaufenden Rohrstück angeordnet ist. Diese Module werden unten näher erläutert.

Die Empfänger-Sammelleitungen 10a bis 12a können auch schräg verlaufen und dementsprechend unter einem Winkel zur Senkrechten angeordnet sein.

Die Anzahl dieser Module bestimmt die gewünschte Anzahl der Sender A bis E, deren Material den Empfängern 1 bis 3 zugeordnet werden soll.

Die Anlage gemäß Fig. 2 ist hinsichtlich der Verknüpfung der Sender A bis E mit den Empfängern 1 bis 3 gleich ausgebildet wie die Anlage gemäß Fig. 1. Bei der Anlage nach Fig. 2 handelt es sich allerdings um ein Druckfördersystem, bei dem anstelle einer Saugquelle eine Druckquelle 23 eingesetzt wird. Sie fördert das Schüttgut aus den Sendern A bis E unter Druck durch die entsprechenden Leitungen zu den Empfängern 1 bis 3.

Während bei der Anlage nach Fig. 1 das Schüttgut mittels Unterdruck von den Sendern A bis E zu dem Empfängern 1 bis 3 gefördert wird, erfolgt dies bei der Anlage gemäß Fig. 2 durch Überdruck.

Die Senderleitungen 5 bis 9 sind jeweils an die Druckquelle 23, die vorzugsweise eine Druckluftquelle ist, angeschlossen. In jeder Senderleitung 5 bis 9 sitzt jeweils ein Ventil 14, mit dem jede Senderleitung 5 bis 9 von der Druckquelle 23 getrennt werden kann. Die Ventile 14 befinden sich im Bereich zwischen der jeweiligen Auslassöffnung 3 der Sender A bis E und der Druckquelle 23.

Hinsichtlich der Zuordnung der Sender A bis E zu den Empfängern 1 bis 3 wird auf die Ausführungen zur Anlage gemäß Fig. 1 verwiesen.

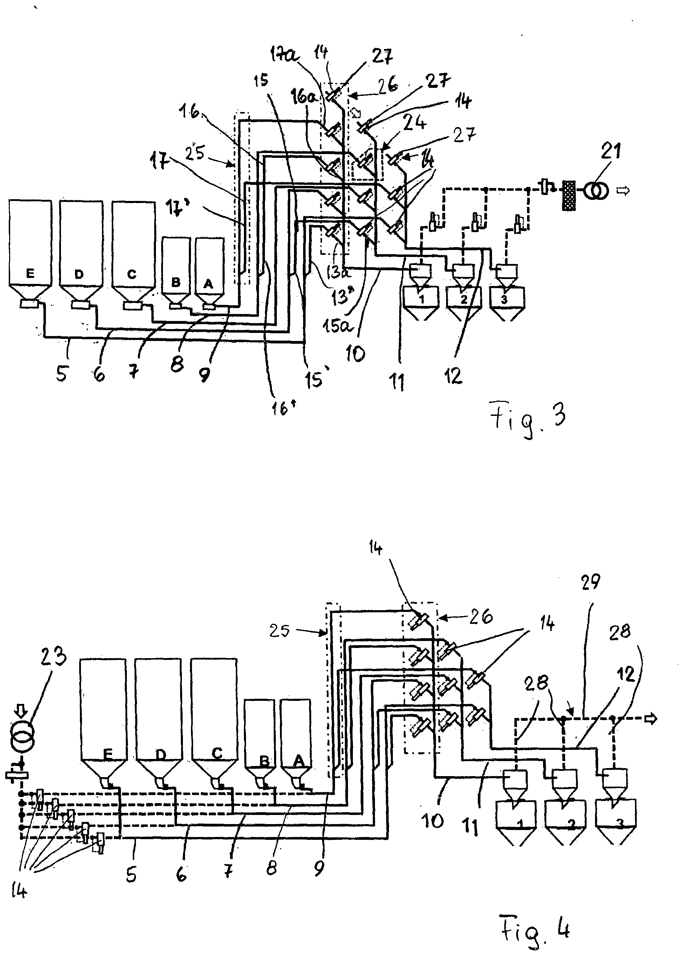

Die Anlagen gemäß den Fig. 3 und 4 sind grundsätzlich gleich ausgebildet, wie die Anlagen gemäß den Fig. 1 und 2. Bei der Anlage gemäß Fig. 3 handelt es sich um eine Saugförderanlage und bei der Anlage gemäß Fig. 4 um eine Druckförderanlage.

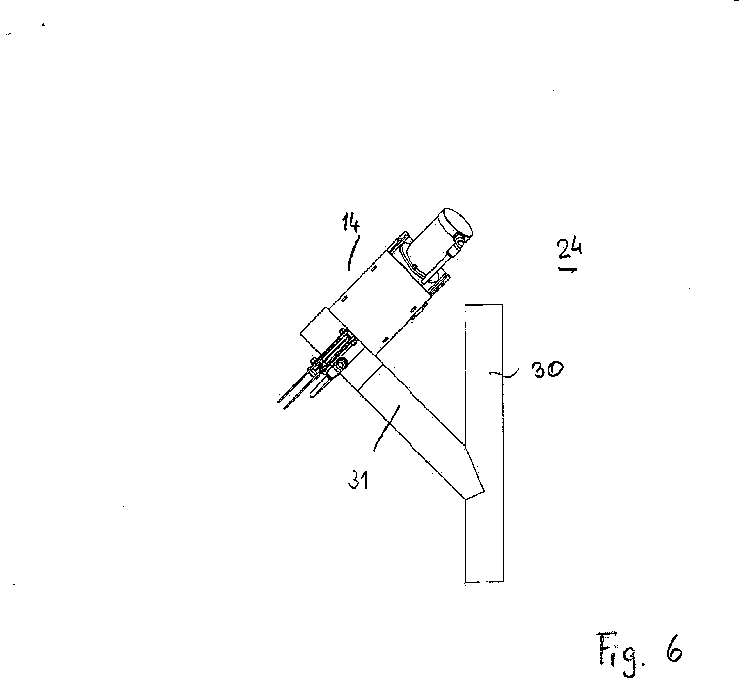

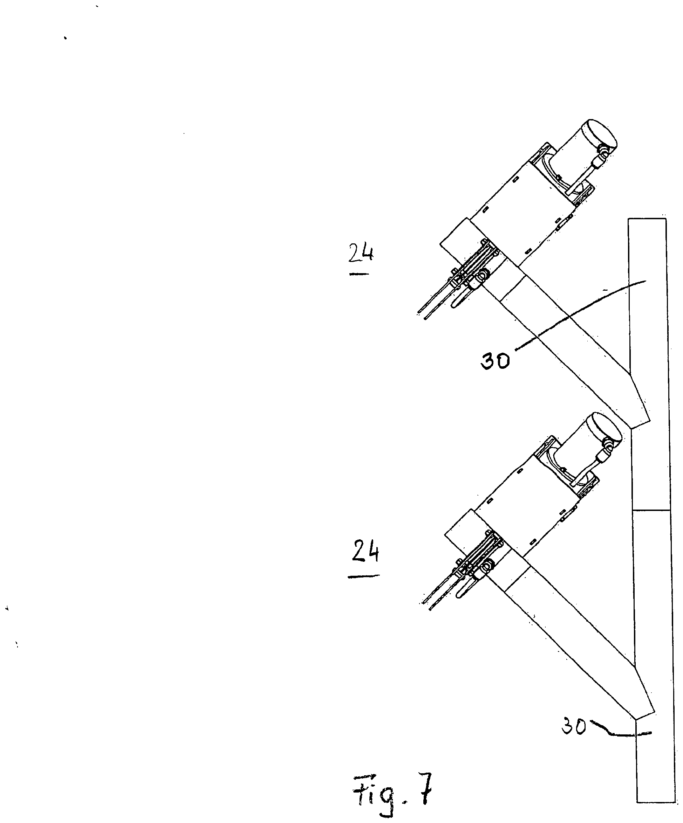

In Fig. 3 ist mit einer gestrichelten Linie ein Modul 24 gekennzeichnet, das anhand der Fig. 6 und 7 im Einzelnen beschrieben werden wird. Die Module 24 werden beim Aufbau der Anlage fluiddicht zusammengesteckt.

Wie bei den vorigen Ausführungsformen sind die Anlagen gemäß den Fig. 3 und 4 beispielhaft so aufgebaut, dass dem Empfänger 1 die Sender A, B, D und E, dem Empfänger 2 die Sender B, C, und D und dem Empfänger 3 die Sender D und E zugeordnet wind.

Im Unterschied zu den Ausführungsformen nach den Fig. 1 und 2 befinden sich die Ventile 14 in schräg verlaufenden Abschnitten der Querleitungen 13, 15 bis 17.

Die Querleitungen 13, 15 bis 17 haben jeweils einen parallel zur Senderleitung 5 bis 9 verlaufenden Leitungsabschnitt 13', 15' bis 17', der über einen senkrecht zu ihm verlaufenden Leitungsabschnitt in den schräg nach unten verlaufenden, das Ventil 14 aufweisenden Leitungsabschnitt 13a, 15a bis 17a übergeht.

Die Senderleitung 9 mit dem zugehörigen Leitungsabschnitt 17' der Querleitung 17 bildet eine von unten nach oben ausgerichtete Sender-Verteilleitung 25, was in Fig. 3 durch eine strichpunktierte Linie dargestellt ist. Alle anderen Senderleitungen 5 bis 8 mit den Querleitungen 13', 15', 16' bilden jeweils eine weitere von unten nach oben ausgerichtete Sender-Verteilleitung.

Die Empfängerleitungen 10 bis 12 mit den an sie anschließenden schrägen, die Ventile 14 aufweisenden Leitungsabschnitten bilden jeweils eine Empfänger-Sammelleitung 26, wie dies für die Empfängerleitung 10 mit den daran angeschlossenen schrägen Leitungsabschnitten durch eine strichpunktierte Linie angegeben ist. Da im Ausführungsbeispiel drei Empfängerleitungen 10 bis 12 vorgesehen sind, sind dementsprechend auch drei Empfänger-Sammelleitungen vorhanden.

Die Empfängerleitungen 10 bis 12 sind am freien Ende mit jeweils einem Leersaugmodul 27 versehen. Jedes Leersaugmodul 27 hat jeweils ein Ventil 14, das für den Leersaugvorgang geöffnet werden kann und nicht an eine Senderleitung angeschlossen ist.

Bei der Druckförderanlage gemäß Fig. 4 sind in gleicher Weise die Sender-Verteilleitungen 25 und die Empfänger-Sammelleitung 26 vorgesehen. Von ihnen ist, wie bei der vorigen Ausführungsform, nur jeweils eine Verteil- bzw. Sammelleitung dargestellt.

Wie beim Ausführungsbeispiel nach Fig. 2 führt von den Empfängern 1 bis 3 jeweils eine Abluftleitung 28 nach außen, über welche die Abluft abgeführt werden kann.

Vorteilhaft sind die Abluftleitungen 28 an eine gemeinsame Sammelleitung 29 angeschlossen.

Die Abluftleitungen 28, 29 können ggf. mit Ventilen oder Rückschlagklappen versehen sein, um diese Leitungen bei Bedarf schließen zu können.

Die Verbindung zwischen den Sendern A bis E und den Empfängern 1 bis 3 ist im Wesentlichen gleich vorgesehen wie bei der Anlage gemäß Fig. 3. Da die Anlage nach Fig. 4 eine Druckförderanlage ist, sind im Unterschied zur Saugförderanlage nach Fig. 3 keine Leersaugmodule vorgesehen. Während bei der Anlage nach Fig. 3 das in den Sendern A bis E befindliche Schüttgut mittels der Saugquelle 21 abgesaugt und den Empfängern 1 bis 3 zugeführt wird, wird bei der Ausführungsform nach Fig. 4 das Schüttgut durch ein Druckmedium den Empfängern 1 bis 3 zugeführt.

Nach jedem Förderzyklus fällt entsprechend den Ausführungsformen nach den Fig. 1 und 3 das noch in der Sender-Verteilleitung 25 vorhandene Material nach unten. Auch das in der Empfänger-Sammelleitung 26 vorhandene Material fällt nach unten. Bei einem nächsten Förderzyklus wird dieses Restmaterial gefördert. Dadurch wird verhindert, dass ein solches Restmaterial in den Förderleitungen sog. Pfropfen bildet, die unter Umständen zu einem Verstopfen der Förderleitung führen.

Werden am obersten Punkt der Empfänger-Sammelleitungen 26 die Leersaugmodule 27 eingesetzt, die keinen Anschluss an einen der Sender A bis E haben, kann bei der Saugförderanlage nach Fig. 3 nach jedem Saugvorgang (Förderzyklus) die Empfängerleitung 10 bis 12 bis zum Abscheider des Empfängers 1 bis 3 leergesaugt und damit gereinigt werden. Dies ist vor allen Dingen erforderlich bei einem Materialwechsel.

Auch bei der Druckförderanlage nach Fig. 4 sind diese Vorteile gegeben. Der Luftstrom fließt in gleicher Weise durch die Leitungen 5 bis 12 wie bei der Saugförderanlage nach Fig. 3. Auch bei der Druckförderanlage ist durch die aufwärts, vorzugsweise senkrecht verlaufenden Sender-Verteilleitungen 25 und Empfänger-Sammelleitungen 26 gewährleistet, dass nach jedem Förderzyklus das in diesen Leitungen sich noch befindende Material nach unten fällt und beim nächsten Förderzyklus wieder erfasst und aus den Leitungen herausgefördert wird.

Bei allen beschriebenen Ausführungen gemäß den Fig. 1 bis 4 wird das Schüttgut in den Empfängerleitungen 26 von oben nach unten gefördert. Unter einer Förderung von oben nach unten ist sowohl eine senkrechte als auch eine unter einem Winkel schräg zur Senkrechten erfolgende Förderung zu verstehen. Dadurch wird erreicht, dass das restliche Schüttgut, das am Ende des Fördervorganges noch in den Leitungen verbleibt, beim nächsten Förderzyklus mitgenommen wird. Auf diese Weise wird eine Verstopfung der entsprechenden Leitungen durch zurückgebliebenes Restmaterial nach Abschluss des Förderzyklus vermieden.

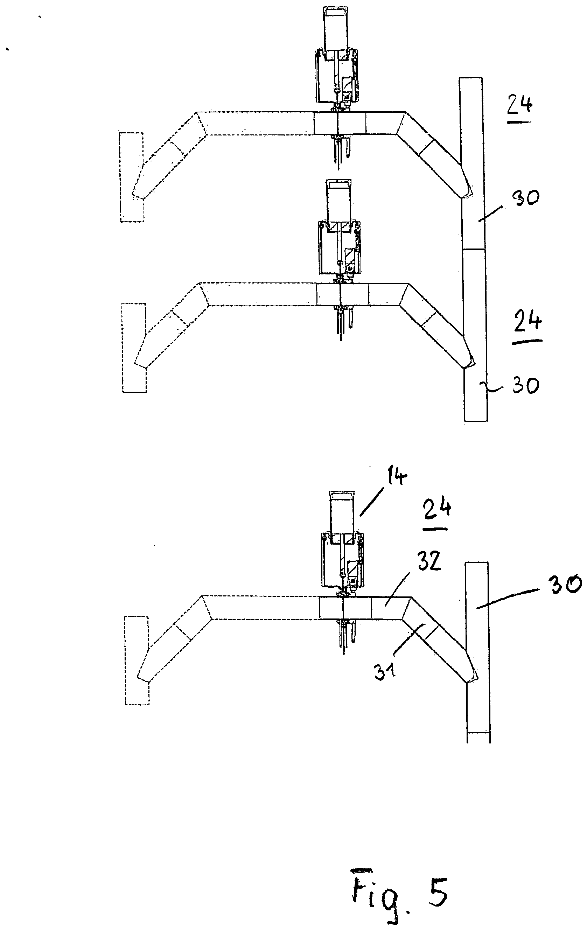

Fig. 5 zeigt beispielhaft eine erste Ausführungsform eines Moduls 24. Es hat einen Rohrabschnitt 30, von dem ein Querstück 31 schräg aufwärts abzweigt. Es geht am freien Ende in einen senkrecht zum Rohrabschnitt 30 verlaufenden Endabschnitt 32 über, in dem das Ventil 14 angeordnet ist.

Mit den Rohrabschnitten 30 können, wie beispielhaft Fig. 5 zeigt, zwei Module 24 zusammengesteckt werden. Die Rohrabschnitte 30 bilden in der Anlage Teile der Empfänger-Sammelleitungen 26.

Das Modul 24 gemäß den Fig. 6 und 7 hat ebenfalls den in der Einbaulage senkrecht verlaufenden Rohrabschnitt 30, von dem schräg aufwärts das Querstück 31 abzweigt. Am freien Ende dieses Querstückes 31 befindet sich das Ventil 14. Diese Art von Modul wird bei den Anlagen gemäß den Fig. 3 und 4 eingesetzt. Mit den Rohrabschnitten 30 werden die Module 24 aufeinander gesteckt (Fig. 7), die die Empfänger-Sammelleitung 26 (Fig. 3 und 4) bilden.

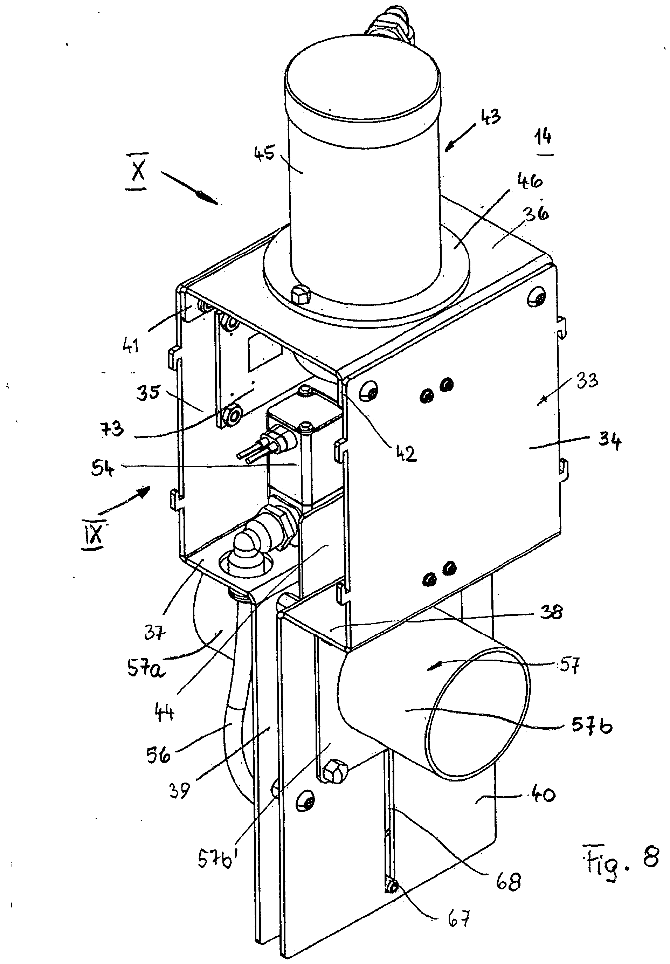

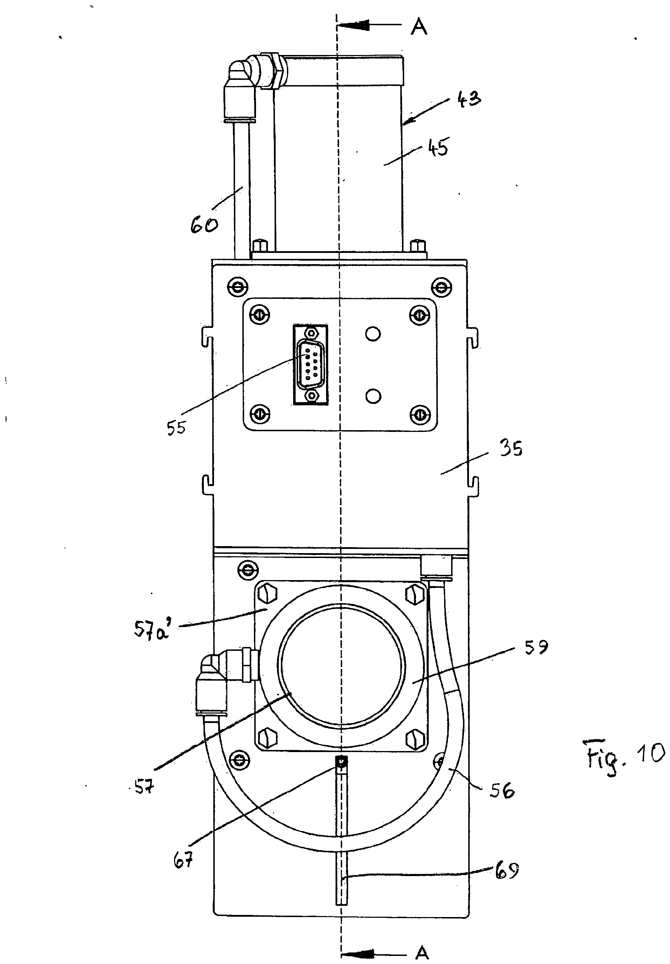

Das Ventil 14 wird anhand der Fig. 8 bis 12 im Einzelnen beschrieben. Es hat ein Gehäuse 33, das parallel zueinander liegende Seitenwände 34, 35 aufweist. An dem in den Zeichnungen oberen Ende sind die Seitenwände 34, 35 durch eine obere Wand 36 miteinander verbunden.

Am gegenüberliegenden Ende sind die Seitenwände 34, 35 derart abgewinkelt ausgebildet, dass sie in Bodenabschnitte 37, 38 übergehen, die auf gleicher Höhe und parallel zur Wand 36 sowie senkrecht zu den Seitenwänden 34, 35 liegen. Die Bodenabschnitte 37, 38 gehen in rechtwinklig nach unten verlaufende Halteteile 39, 40 über, die mit Abstand zueinander parallel verlaufen.

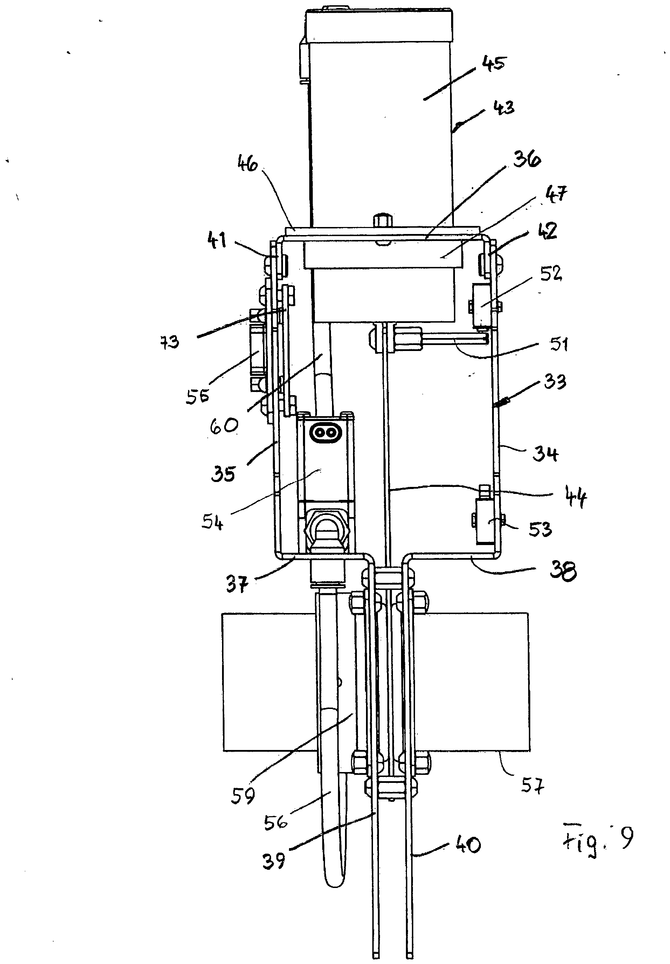

Zur Bildung der Seitenwände 34, 35, der Bodenabschnitte 37, 38 und der Halteteile 39, 40 werden vorteilhaft zwei Bleche verwendet, die in der beschriebenen Weise gebogen werden. Diese Ausbildung ergibt sich insbesondere aus den Fig. 8 und 9.

Die obere Wand 36 wird als gesondertes Bauteil vorteilhaft mit den Seitenwänden 34, 35 verbunden. Die Wand 36 ist vorteilhaft u-förmig gebogen und wird mit ihren Schenkeln 41, 42 an der Innenseite der Seitenwände 34, 35 anliegend fest mit ihnen verbunden, beispielsweise verschraubt.

Auf der Wand 36 ist ein Antrieb 43 befestigt, mit dem ein plattenförmiger Schieber 44 zum Öffnen und Schließen der entsprechenden Leitung 57 verstellt werden kann. Der Schieber 44 hat eine Durchtrittsöffnung 44a, deren Durchmesser dem Innendurchmesser der Leitung 57 entspricht.

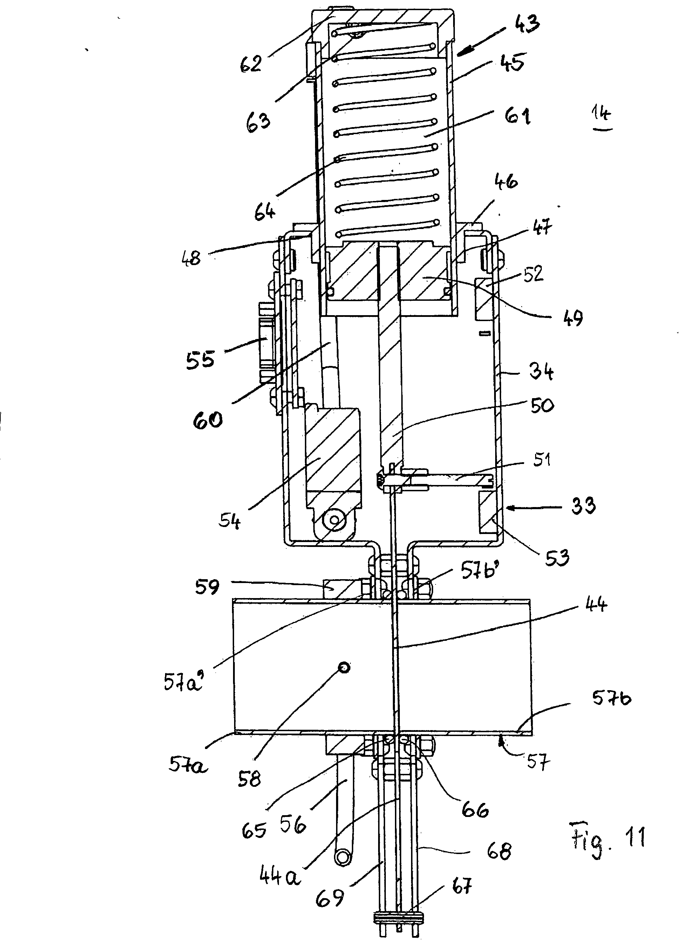

Der Antrieb 43 hat ein Gehäuse 45, das durch die Wand 36 in das Gehäuse 33 ragt. Mit einem Ringflansch 46 ist das zylindrische Gehäuse 45 auf der Außenseite der Wand 36 befestigt, vorzugsweise angeschraubt. Der Ringflansch 46 ist Teil einer Haltebuchse 47, die durch eine Öffnung 48 (Fig. 11) in der Wand 36 in das Gehäuse 33 ragt. Die Haltebuchse 47 ist auf der Außenseite des Gehäuses 45 befestigt.

Im zylindrischen Gehäuse 45 ist ein Kolben 49 verschiebbar gelagert (Fig. 11). Der Schieber 44 ist über ein Verbindungsstück 50 mit dem Kolben 49 fest verbunden. Vom Verbindungsstück 50 steht quer ein Arm 51 ab, der bis nahe an die Seitenwand 34 des Gehäuses 33 ragt und mit zwei Endschaltern 52, 53 zusammenwirkt, die an der Innenseite der Seitenwand 34 vorgesehen sind.

Die Endschalter 52, 53 können abweichend vom dargestellten Ausführungsbeispiel an einer Platine 73 (Fig. 8 und 9) angeordnet sein, die beispielhaft an der Seitenwand 35 des Gehäuses 33 angeordnet ist.

Im Gehäuse 33 des Ventiles 14 ist ein Magnetventil 54 untergebracht, das beispielsweise auf dem Bodenabschnitt 37 in geeigneter Weise befestigt ist.

An der Außenseite der Seitenwand 35 des Gehäuses 33 befindet sich eine Schnittstelle 55 zur Betätigung des Magnetventils 54.

Das Magnetventil 54 ist durch einen Verbindungsschlauch 56 als Druckübertragungsleitung mit der jeweiligen Förderleitung verbunden, die in den Fig. 8 bis 12 mit 57 bezeichnet ist.

Der Verbindungsschlauch 56 ist mit dem Inneren der Förderleitung 57 strömungsverbunden, die eine Öffnung 58 aufweist (Fig. 11), an welche der Verbindungsschlauch 56 angeschlossen ist. Er ist beispielsweise mittels einer Klemmschelle 59 auf der Förderleitung 57 gehalten (Fig. 11).

Das Magnetventil 54 ist über einen weiteren Verbindungsschlauch 60 als Druckübertragungsleitung mit einem Zylinderraum 61 im Gehäuse 45 strömungsverbunden. Der Zylinderraum 61 befindet sich im Bereich zwischen dem Kolben 49 und einem Deckel 62, der den Zylinderraum 61 luftdicht abschließt. Nahe der Unterseite des Deckels 62 befindet sich der Lufteintritt 63 (Fig. 11).

Auch der Kolben 49 schließt den Zylinderraum 61 nahezu luftdicht ab, so dass er einwandfrei nach unten bewegt werden kann.

Bei der dargestellten Ausführungsform ist im Zylinderraum 61 wenigstens eine Druckfeder 64 untergebracht, welche den Kolben 49 in Richtung auf die Schließstellung des Schiebers 44 belastet und die sich am Deckel 62 abstützt. Die Druckfeder 64 oder ein entsprechendes anderes Druckmedium ist für die Funktion des Ventiles14 dann nicht erforderlich, wenn das Ventil 14 in einer senkrechten oder in einer nahezu senkrechten Lage eingebaut wird. Dann gelangt der Kolben 49 aufgrund seines Gewichtes sowie des Gewichtes des mit ihm verbundenen Verbindungsstückes 50 und des Schiebers 44 nach unten in die in Fig. 11 dargestellte Endlage, in welcher der Schieber 44 den Durchtritt des Schüttgutes durch die Förderleitung 57 verschließt. Zur Abdichtung liegen an beiden Seiten des Schiebers 44 ringförmige Dichtungselemente 65, 66 an, die beispielsweise durch O-Ringe gebildet sind und den Durchgang in der Förderleitung 57 für den Schieber 44 luftdicht abschließen. Die Dichtelemente 65, 66 liegen zwischen den Halteteilen 39, 40 an den zwischen den Halteteilen 39, 40 befindlichen Enden der Rohrabschnitte 57a, 57b an.

An den voneinander abgewandten Außenseiten der Halteteile 39, 40 ist jeweils ein Rohrabschnitt 57a, 57b befestigt.

Ist das Magnetventil 44 geschlossen, bleibt der Schieber 44 aufgrund seines Eigengewichtes (zusätzlich des Verbindungsstückes 50 und des Kolbens 49) in seiner in Fig. 11 dargestellten Schließlage. Der Kolben 49 nimmt entsprechend seine untere Lage ein. Der Arm 51 des Verbindungsstückes 50 befindet sich am unteren Endschalter 53 (Fig. 11).

Der Schieber 44 ist am unteren Ende mit einem ihn quer durchsetzenden Anschlag 67 versehen (Fig. 11). Er ist beispielhaft stiftförmig ausgebildet und ragt in Längsschlitze 68, 69, die in den beiden Halteteilen 39, 40 vorgesehen sind. Sie liegen mit Abstand beiderseits des Schiebers 44, so dass dessen Verschiebebewegung durch die Halteteile 39, 40 nicht beeinträchtigt wird.

In der Schließlage des Schiebers 44 liegt der Anschlag 68 am unteren Ende der Längsschlitze 68, 69 an (Fig. 8 und 11).

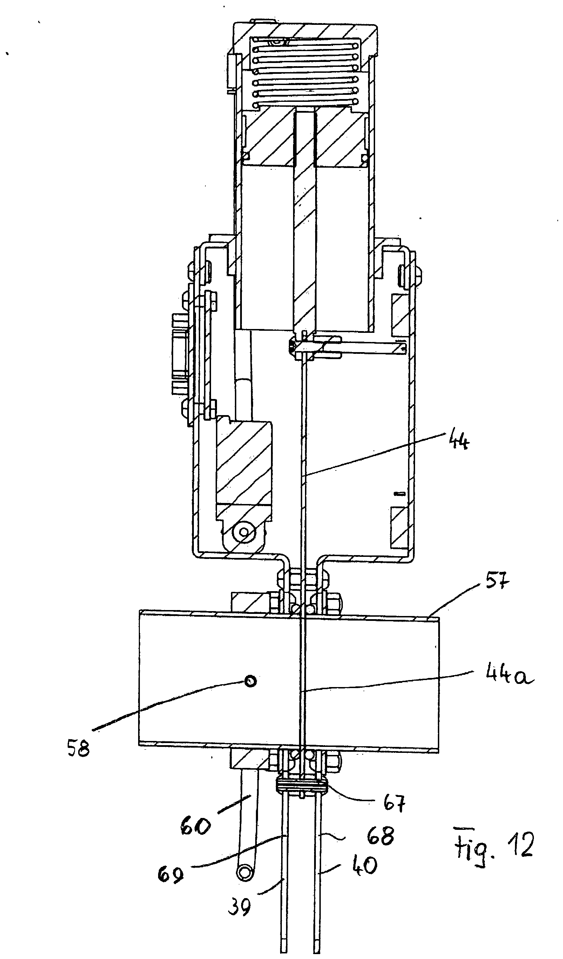

Wird durch die Förderanlage-Steuerung das Magnetventil 54 geöffnet und wird in der Förderleitung 57 ein Unterdruck aufgebaut, so startet der Fördervorgang. Über die Verbindungsschläuche 56, 60 entsteht im Zylinderraum 61 des Antriebes 43 ebenfalls ein Unterdruck, der dazu führt, dass der Kolben 49 nach oben gegen die Kraft der Druckfeder 64 angezogen wird. Dadurch wird der Schieber 44 nach oben in seine Offenstellung verschoben (Fig. 12), in der die Durchtrittsöffnung 44a den Durchgang durch die Leitung 57 freigibt.

Der Schieber 44 wird bereits dann hochgezogen, bevor die Materialförderung einsetzt. In der Verbindungsleitung 56, 54, 60 von der Förderleitung 57 zum Zylinderraum 61 gibt es während des Fördervorganges praktisch keinen Luftstrom, da der Unterdruck in der Förderleitung 57 infolge der beschriebenen Strömungsverbindung gleich ist mit dem Unterdruck im Zylinderraum 61.

Wird das Ventil 14 bei der Druckförderung (Fig. 2 und 4) eingesetzt, dann ist die Funktion gleich wie bei der beschriebenen Saugförderung. Lediglich das Ventil 14 wird dann in umgekehrter Lage eingebaut, wie ein Vergleich der Fig. 1 und 2 bzw. 3 und 4 ergibt. Bei der Druckförderung (Fig. 1 und 3) erstrecken sich die Ventile 14 von der jeweiligen Leitung aus aufwärts. Bei der Druckförderung (Fig. 2 und 4) erstrecken sich die Ventile 14 von der jeweiligen Leitung aus nach unten. Bei der Druckförderung sorgt der Druck in der Förderleitung 57, der über die beschriebene Verbindungsleitung 56, 60 im Zylinderraum 61 wirksam ist, dafür, dass der Kolben 49 so verschoben wird, dass der Schieber 44 seine Offenstellung einnimmt.

Die Durchtrittsöffnung 44a befindet sich in diesem Fall an einer anderen Stelle des Schiebers 44, damit er die Leitung 57 freigeben oder schließen kann. Während die Durchtrittsöffnung 44a beim Einsatz bei der Saugförderung an dem vom Kolben 49 abgewandten Bereich des Schiebers 44 vorgesehen ist, befindet sich die Durchtrittsöffnung 44a beim Einsatz des Ventils 14 bei der Druckförderung an dem dem Kolben 49 benachbarten Bereich des Schiebers 44.

Die beiden Endstellungen des Schiebers 44 werden in einfacher Weise dadurch gewährleistet, dass der Anschlag 67 an den beiden Ende der Längsschlitze 68, 69 zur Anlage kommt.

Der quer vom Verbindungsstück 50 abstehende Arm 51 wirkt in der Offensowie in der Schließstellung mit dem jeweiligen Endschalter 52, 53 zusammen. Sie sind vorteilhaft als Näherungsschalter ausgebildet, mit denen überwacht werden kann, ob das Ventil 14 geöffnet oder geschlossen ist. In der jeweiligen Endstellung des Schiebers 44 wird über die Endschalter 52, 53 ein entsprechendes Schaltsignal geliefert, anhand dessen zuverlässig festgestellt werden kann, dass der Schieber 44 seine Offen- bzw. Schließposition einnimmt.

Die Druckfeder 64 ist bei einem vertikalen Einbau des Ventiles 14 nicht erforderlich, weil der Schieber 44 bei nicht geöffnetem Magnetventil 54 stets aufgrund des beschriebenen Eigengewichtes in seine Schließstellung gelangt. Da die Druckfeder 64 in der Offenstellung des Schiebers 44 zusammengedrückt ist (Fig. 12), unterstützt sie die Abwärtsbewegung des Kolbens 49, wenn der Schieber 44 in seine Schließstellung verstellt werden soll.

Wird das Ventil 14 allerdings innerhalb der Anlage beispielsweise schräg eingebaut, dann wird durch die Druckfeder 64 sichergestellt, dass der Kolben 49 zuverlässig verschoben wird, um den Schieber 44 aus seiner Offenin seine Schließstellung zu verschieben. Insbesondere wenn das Ventil 14 horizontal eingebaut werden sollte, ist die Druckfeder 64 erforderlich.

Vorteilhaft ist die Druckfeder 64 leicht vorgespannt, wenn sich der Kolben 49 in einer Position befindet, in welcher der Schieber 44 die Förderleitung 57 verschließt. Die Federkraft ist so eingestellt, dass der Kolben 49 auf jeden Fall verschoben werden kann, wenn der Schieber 44 in seine Schließstellung verschoben werden muss.

Anstelle der Druckfeder 64 kann auch jedes andere geeignete Druckmedium herangezogen werden, beispielsweise Pneumatikmedium.

Mit dem Magnetventil 54 können die Ventile 14 in einfacher Weise betätigt werden, so dass das Schüttgut aus dem jeweiligen Sender A bis E zum jeweiligen Empfänger 1 bis 3 gefördert werden kann. Durch Betätigung der Magnetventile 54 können die erforderlichen Ventile 14 in der beschriebenen Weise geöffnet werden. Es werden nur diejenigen Ventile 14 geöffnet, die zur Förderung des Schüttgutes vom ausgewählten Sender A bis E zum ausgewählten Empfänger 1 bis 3 erforderlich sind. Auf diese Weise ist insbesondere auch ein Wechsel des Senders und/oder des Empfängers und/oder der Schüttgutart einfach möglich.

Das Ventil 14 hat einen einfachen konstruktiven Aufbau und lässt sich kostengünstig fertigen. Mittels der Verbindungsschläuche 56, 60 ist eine einfache und dennoch zuverlässige Strömungsverbindung zwischen dem Zylinderraum 61 und der Förderleitung 57 bei geöffnetem Magnetventil 54 sichergestellt.

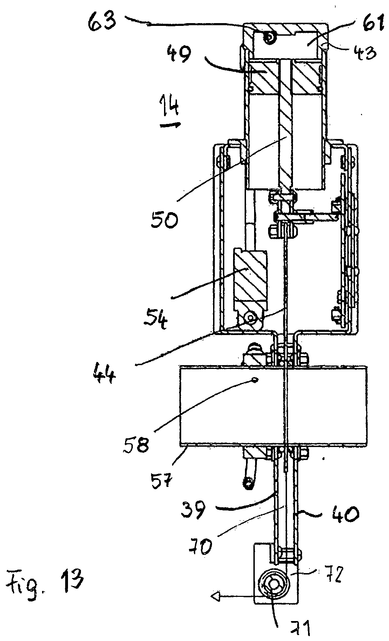

Fig. 13 zeigt ein weiteres Ausführungsbeispiel eines Ventiles. Es ist so ausgebildet, dass es ohne Einsatz eines Druckmediums, wie der Druckfeder 64 des vorigen Ausführungsbeispieles, schräg oder auch horizontal in die jeweilige Förderleitung eingebaut werden kann.

Der Schieber 44 ist mit wenigstens einem Rückholelement 70 verbunden, das im Ausführungsbeispiel ein Zugseil ist, das über eine Umlenkrolle 71 umgelenkt wird. Das Rückholelement 70 ist beispielsweise mit einem (nicht dargestellten) Gewicht versehen, mit dem eine Rückstellkraft auf den Schieber 44 ausgeübt wird, wenn sich dieser in seiner in Fig. 13 dargestellten Offenstellung befindet.

Die Rückstellkraft kann auch dadurch erzeugt werden, dass das Rückholelement 30 ein Gummiseil oder dgl. ist, das in der Offenstellung des Schiebers 44 unter Spannung steht.

Die Umlenkrolle 71 ist auf einem Träger 72 drehbar gelagert, der am freien unteren Ende der Halteteile 39, 40 befestigt ist.

Im Übrigen ist das Ventil 14 gleich ausgebildet wie die vorige Ausführungsform.

Fig. 13 zeigt den Kolben 49 in seiner oberen Stellung innerhalb des Gehäuses 43. Die Förderleitung 57 ist durch den Schieber 44 freigegeben, so dass das Schüttgut gefördert werden kann. Im dargestellten Ausführungsbeispiel wird das Schüttgut durch einen Saugfördervorgang transportiert. Er wird in der beschriebenen Weise infolge des Unterdruckes in der Förderleitung 57 in die in Fig. 13 dargestellte obere Stellung verschoben. Über die Verbindungsschläuche 56, 60 wirkt im Zylinderraum 61 der gleiche Druck wie in der Förderleitung 57, der im Falle einer Saugförderung ein Unterdruck ist. Er führt in der beschriebenen Weise dazu, dass der Kolben 49 in die obere Lage verschoben wird.

Die über das Rückholelement 70 auf den Schieber 44 und damit auf den Kolben 49 wirkende Rückstellkraft ist so eingestellt, dass der Kolben 49 durch die Unterdruckwirkung verschoben werden kann.

Bei Beendigung des Fördervorganges wird der Kolben 49 unter seinem Eigengewicht, unterstützt durch das Gewicht des Verbindungsstückes 50 und des Schiebers 44, wieder nach unten verschoben, so dass der Schieber 44 in seine Schließstellung gelangt.

Ist das Ventil schräg oder horizontal eingebaut, sorgt das Rückholelement 50 zuverlässig dafür, dass der Kolben 49 zurückgeschoben wird und der Schieber 4 in seine Schließstellung gelangt.

## Patentansprüche

1. Schieberventil mit einem Schieber (44) zum Öffnen und Schließen einer Förderleitung (57), der mit einem Kolben (49) verbunden ist, der einen Druckraum (61) innerhalb eines Gehäuses (43) begrenzt, der mit dem Inneren der Förderleitung (57) druckverbindbar ist,
**dadurch gekennzeichnet, dass** in der Druckübertragungsverbindung (56, 60) zwischen der Förderleitung (57) und dem Druckraum (61) ein Schaltventil (54) sitzt, das in geöffnetem Zustand die Druckverbindung zwischen der Förderleitung (57) und dem Druckraum (61) freigibt, so dass der Schieber (44) über den Kolben (49) in seine Freigabestellung verschiebbar ist.

2. Schieberventil nach Anspruch 1,
**dadurch gekennzeichnet, dass** der Schieber (44) über wenigstens ein Verbindungsstück (50), vorzugsweise eine Kolbenstange, mit dem Kolben (49) verbunden ist.

3. Schieberventil nach Anspruch 1 oder 2,
**dadurch gekennzeichnet, dass** in den Druckraum (61) wenigstens eine Öffnung (63) mündet, an die eine erste Druckübertragungsleitung (60) angeschlossen ist, die an das Schaltventil (54) angeschlossen ist.

4. Schieberventil nach einem der Ansprüche 1 bis 3,
**dadurch gekennzeichnet, dass** das Schaltventil (54) innerhalb eines Ventilgehäuses (33) angeordnet ist.

5. Schieberventil nach einem der Ansprüche 1 bis 4,
**dadurch gekennzeichnet, dass** an das Schaltventil (54) eine zweite Druckübertragungsleitung (56) angeschlossen ist, die zur Verbindung mit der Förderleitung (57) vorgesehen ist.

6. Schieberventil nach einem der Ansprüche 1 bis 5,
**dadurch gekennzeichnet, dass** das Schaltventil (54) ein Magnetventil ist.

7. Schieberventil nach einem der Ansprüche 1 bis 6,
**dadurch gekennzeichnet, dass** die Position des Schiebers (44) in der Offen- und/oder in der Schließstellung durch Endschalter (52, 53) überwacht wird.

8. Schieberventil nach einem der Ansprüche 1 bis 7,
**dadurch gekennzeichnet, dass** auf den Kolben (49) in der Offenstellung des Schiebers (44) eine Rückstellkraft wirkt.

9. Schieberventil nach Anspruch 8,
**dadurch gekennzeichnet, dass** im Druckraum (61) wenigstens ein Druckmedium (64), vorzugsweise eine Druckfeder, untergebracht ist, das auf den Kolben (49) die Rückstellkraft ausübt.

10. Schieberventil nach einem der Ansprüche 1 bis 9,
**dadurch gekennzeichnet, dass** am Schieber (44) wenigstens ein Rückholelement (70) angreift.

11. Schieberventil nach Anspruch 10,
**dadurch gekennzeichnet, dass** das Rückholelement (70) ein elastisch dehnbares oder ein ein Gewicht tragendes Zugseil ist.

12. Modul zur Herstellung einer Förderleitung (5 bis 12, 57) einer Anlage zum Fördern von Schüttgut, mit einem Rohrabschnitt (30), von dem ein rohrförmiges Querstück (31, 32) abzweigt, in dem ein Ventil (14) nach einem der Ansprüche 1 bis 11 sitzt.

13. Anlage zum Fördern von Schüttgut, mit wenigstens zwei das Schüttgut enthaltenden Sendern (A bis E) und wenigstens einem das Schüttgut aufnehmenden Empfänger (1 bis 3), die durch Förderleitungen (5 bis 12) miteinander leitungsverbunden sind,
**dadurch gekennzeichnet, dass** die Förderleitungen wenigstens eine Empfänger-Sammelleitung (26) aufweisen, die einen aufwärts verlaufenden Leitungsabschnitt (10 bis 12a) aufweist, in den wenigstens zwei Querleitungen (13, 15 bis 17, 14', 15' bis 17') münden, in denen jeweils ein Ventil (14) nach einem der Ansprüche 1 bis 11 zum Öffnen und Schließen der Leitungsabschnitte (10a bis 13a) sitzt.

14. Anlage nach Anspruch 13,
**dadurch gekennzeichnet, dass** die Empfänger-Sammelleitung (26) aus Modulen (24) nach Anspruch 12 zusammengesetzt ist.

15. Anlage nach Anspruch 13 oder 14,
**dadurch gekennzeichnet, dass** am Ende der Querleitung ein Leersaugmodul (27) angeordnet ist, das keinen Anschluss für eine vom Sender (A bis E) kommende Leitung hat.
